# EUROPÄISCHE PATENTANMELDUNG

(11) **EP 0 666 426 A1**
(43) Veröffentlichungstag der Anmeldung: **09.08.1995**
(21) Anmeldenummer: 95100741.8
(22) Anmeldetag: 20.01.1995
(51) Int. Cl.: F16B 13/06

(54) **Spreizbolzen**

(30) Priorität: 07.02.1994 DE 9401970 U
(71) Anmelder: HÄFELE GmbH & Co., D-72202 Nagold (DE)
(72) Erfinder: Yildiz, Muhammet, D-71226 Öschelbronn (DE)
(74) Vertreter: Schmid, Berthold, Dipl.-Ing.

(57) **Zusammenfassung**

Bei Beschlägen zum Verbinden von Möbelplatten mit einem sich an der einen Platte abstützenden Spannteil sowie mit einem in einer Ausnehmung in der zweiten Platte festlegbaren Anzugselement 1, wobei das Anzugselement 1 einen mittels des Spannteils in axialer Spannrichtung ziehbaren und sich in seinem dem zweiten Bauelement zugeordneten Bereich quer zu der Spannrichtung erweiternden Anzugsbolzen 2 sowie ein Klemmstück 3 aufweist, das den Umfang des Anzugsbolzens 2 im Bereich der Erweiterung zumindest teilweise umgreift und mittels des Anzugsbolzens 2 quer zu der Spannrichtung spreizbar ist, soll eine einfache Herstellung und Montage erreicht werden, wobei die Möbelplatten fest, dauerhaft und unmittelbar aneinander anliegend miteinander verbunden sind. Zu diesem Zweck weist das Klemmstück 3 an seinem dem Anzugsbolzen 2 abgewandten Außenumfang wenigstens einen vorzugsweise zwei die Außenkontur des Klemmstücks 3 quer zu der Spannrichtung überragenden und gegen die Spannrichtung elastisch verschwenkbaren Stützarm 5 auf.

## Beschreibung

Die Erfindung betrifft einen Beschlag zum Verbinden von Bauelementen, insbesondere von Möbelplatten, mit einem sich an dem einen Bauelement abstützenden Spannteil sowie mit einem in einer Ausnehmung an dem zweiten Bauelement festlegbaren Anzugselement, wobei das Anzugselement einen mittels des Spannteils in axialer Spannrichtung ziehbaren und sich in seinem dem zweiten Bauelement zugeordneten Bereich quer zu der Spannrichtung erweiternden Anzugsbolzen sowie ein Klemmstück aufweist, das den Umfang des Anzugsbolzens im Bereich der Erweiterung zumindest teilweise umgreift und mittels des Anzugsbolzens quer zu der Spannrichtung spreizbar ist.

Damit mittels derartiger Beschläge eine feste und dauerhafte Verbindung zwischen den betreffenden Bauelementen hergestellt werden kann, muß eine sichere Verankerung des Anzugsbolzens gewährleistet sein. Überdies muß die Verankerung des Anzugsbolzens unmittelbar mit dem Einsetzen der Zugbeanspruchung des Anzugsbolzens in Spannrichtung wirksam sein. Unter dieser Voraussetzung ist sichergestellt, daß die miteinander zu verbindenden Bauelemente in Montagelage eng aneinander anliegen und dementsprechend zwischen den Bauelementen kein Spalt verbleibt.

Bekanntermaßen werden zu diesem Zweck Anzugsbolzen verwendet, die an ihrem Schaft mit einem selbstschneidenden Gewinde versehen sind. Bei der Montage werden die bekannten Anzugsbolzen mit ihrem Gewindeteil in die Ausnehmung des betreffenden Bauelements eingedreht. Das Gewinde schneidet sich dabei in die Innenwandung der Bohrung ein und legt auf diese Weise den Anzugsbolzen in axialer Richtung fest.

Bei dem bekannten, durchaus funktionstüchtigen Beschlag darf der Durchmesser der Bohrung, in die der Anzugsbolzen eingreift, einen verhältnismäßig engen Toleranzbereich nicht verlassen. Überschreitet der erbohrte Bohrlochdurchmesser nämlich den vorgegebenen Soll-Durchmesser in zu starkem Maße, so steht dem Gewinde nach dem Eindrehen ein verhältnismäßig schwaches Widerlager zur Verfügung und die Verbindung zwischen dem Anzugsbolzen und dem betreffenden Bauelement ist lediglich bedingt lastaufnahmefähig. Eine dementsprechend große Sorgfalt muß auf das Einbringen der Montagebohrung in das Bauelement verwendet werden. Um ein optimales Zusammenwirken des Anzugsbolzens mit dem zugehörigen Spannteil zu ermöglichen, muß der Anzugsbolzen in eingedrehter Lage exakt ausgerichtet sein. Dies aber setzt voraus, daß der Anzugsbolzen vor dem Eindrehen mit seinem Gewindeteil genau justiert an dem Bohrlochsrand angesetzt wird. Überdies muß bei der Fertigung des Anzugsbolzens in dessen dem Bohrloch zugeordneten Bereich ein Gewinde eingeschnitten werden.

Im Falle eines weiteren bekannten Beschlages wird ein Spannbolzen verwendet, der in einer Durchgangsbohrung eines Spreizdübels verschiebbar angeordnet ist und sich zu einem Ende hin konisch erweitert. Zur Montage wird der Spreizbolzen mit seinem konischen Ende gemeinsam mit dem Spreizdübel in die betreffende Bohrung des Möbelteils eingesteckt. Durch Zugbeanspruchung des Spannbolzens in Spannrichtung verschiebt sich der Spannbolzen relativ zu dem Spreizdübel und spreizt letzteren dabei quer zu der Spannrichtung. Eine Fixierung des Spreizdübels in der zugehörigen Bohrung setzt also eine Relativverschiebung des Spannbolzens in Spannrichtung voraus. Bis sich die gewünschte Klemmwirkung zwischen dem Spreizdübel und der Bohrungsinnenwand einstellt, wird der Spreizdübel durch den Spannbolzen in Spannrichtung mitgenommen. Dabei tritt der Spreizdübel teilweise aus der Bohrung aus. Aufgrund des sich dadurch ergebenden Überstandes des Spreizdübels über die Montagefläche des betreffenden Möbelteils können die miteinander zu verbindenden Möbelteile in Montagelage nicht unmittelbar aneinander zur Anlage gebracht werden. Zwischen den Möbelteilen verbleibt vielmehr ein Spalt, dessen Spaltweite der Höhe des Überstandes des Spreizdübels entspricht.

Der Erfindung liegt nun die Aufgabe zugrunde, einen Beschlag zu schaffen, der sich durch einfache Herstellung und Montage auszeichnet und der es gleichzeitig erlaubt, Bauelemente fest, dauerhaft und unmittelbar aneinander anliegend miteinander zu verbinden.

Diese Aufgabe wird erfindungsgemäß dadurch gelöst, daß bei einem Beschlag der Eingangs genannten Art das Klemmstück an seinem dem Anzugsbolzen abgewandten Außenumfang wenigstens einen, vorzugsweise zwei, die Außenkontur des Klemmstücks quer zu der Spannrichtung überragenden und gegen die Spannrichtung elastisch verschwenkbaren Stützarm aufweist. Unterschreitet der erbohrte Durchmesser der Bohrung, an deren Wänden der Anzugsbolzen festzulegen ist, den vorgegebenen optimalen Durchmesser und ist das Klemmstück quer zu der Spannrichtung nachgiebig ausgebildet, so läßt sich das aus Anzugsbolzen und Klemmstück bestehende Anzugselement trotz der Durchmesserabweichung in die Bohrung eindrücken. Die zu diesem Zweck notwendige Druckkraft kann von Hand oder erforderlichenfalls unter Zuhilfenahme eines Hilfsmittels, wie etwa eines Hammers, aufgebracht werden. In der eingedrückten Position wird das Anzugselement im Bereich des Klemmstücks vorgespannt in der Bohrung gehalten. Durch Betätigen des Spannteils, bei dem es sich beispielsweise um einen bekannten Spannzylinder mit einer exzentrischen Führungskurve für einen an dem Anzugsbolzen vorgesehenen Bolzenkopf handeln kann, wird der Anzugsbolzen beaufschlagt und in Spannrichtung gezogen. Aufgrund der Vorspannung des Klemmstücks in der Bohrung kommt es beim Anziehen des Anzugsbolzens nicht zu einer Relativbewegung zwischen dem Klemmstück und der Bohrungsinnenwand. Das Klemmstück behält infolgedessen seine Einstecklage in der Bohrung bei und tritt unter der Wirkung der auf den Anzugsbolzen wirkenden Zugkraft nicht aus der Bohrung aus. Dadurch daß sich der Anzugsbolzen im Bereich des Klemmstücks quer zu der Spannrichtung erweitert und aufgrund der Verformbarkeit des Klemmstücks in dieser Richtung wird letzteres bei Zugbelastung des Anzugsbolzens in Spannrichtung an seinem Außenumfang gegen die seitliche Wandung der Bohrung gepreßt. Infolgedessen ergibt sich zwischen dem Anzugselement im Bereich des Klemmstücks und dem zugehörigen Bauelement eine lastaufnahmefähige Verbindung und somit eine wirksame Verankerung des Anzugsbolzens. Durch fortgesetztes Betätigen des sich an dem anderen Bauelement abstützenden Spannteils und einer daraus resultierenden Zugbeanspruchung des Anzugsbolzens lassen sich die beiden Bauelemente fest und dauerhaft aneinander festlegen. Eine entsprechend haltbare Verbindung läßt sich mit dem erfindungsgemäßen Beschlag auch dann herstellen, wenn der Durchmesser der Aufnahmebohrung für das Klemmstück das vorgegebene Sollmaß überschreitet. Wird in diesem Fall das Spannteil betätigt und demzufolge der Anzugsbolzen auf Zug beansprucht, so ist das Anzugselement einschließlich des Klemmstücks zunächst bestrebt, sich in Richtung der Zugbelastung des Anzugsbolzens zu bewegen. Einer derartigen Bewegung aber wirken die die Außenkontur des Klemmstücks quer zu der Spannrichtung überragenden Stützarme entgegen. Wird das Spannteil betätigt und infolgedessen der Anzugsbolzen in axialer Spannrichtung auf Zug beansprucht, so stemmen sich die Stützarme an der Wandung der Aufnahmebohrung des Klemmstücks einer durch die ausgeübte Zugkraft bewirkten Axialbewegung des Anzugselements entgegen. Dadurch wird das durch die Stützarme vorläufig fixierte Klemmstück so lange in der Aufnahmebohrung gehalten, bis der Anzugsbolzen aufgrund seiner in Spannrichtung vorgesehenen Erweiterung den im Bohrungsinnern liegenden Bereich des Klemmstücks aufgeweitet hat und eine wirksame klemmende Verbindung zwischen dem Klemmstück und der Wandung der Aufnahmebohrung hergestellt ist. Die Stützarme übernehmen also die Funktion eines Widerlagers, das dem Austreten des Klemmstücks aus der Aufnahmebohrung entgegenwirkt. Aufgrund ihrer elastischen Verschwenkbarkeit gegen die Spannrichtung setzen die Stützarme dem Eindrücken des Anzugselements in die Aufnahmebohrung für das Klemmstück lediglich einen minimalen Widerstand entgegen. Nach dem Einführen in die Aufnahmebohrung spreizen sie sich von dem Klemmstück ab und legen sich unter Vorspannung an die Wandung der Aufnahmebohrung an. Einfach herstellbar ist der Beschlag insofern, als Anzugsbolzen mit glatten Umfangswänden verwendet werden können und dementsprechend keine Gewindeabschnitte an dem Bolzenumfang hergestellt werden müssen.

In vorteilhafter Ausgestaltung der Erfindung ist vorgesehen, daß an dem Klemmstück wenigstens eine in einer radialen Ebene wirksame Abstützung für den Stützarm vorgesehen ist. Die Abstützung dient zur Aufnahme derjenigen Belastungen, die auf den Stützarm wirken, wenn das Klemmstück in der zugehörigen Montagebohrung verdreht wird. Ein Verdrehen des Klemmstücks kann sowohl dessen Einführen in die Bohrung als auch dessen Entnahme aus der Bohrung erleichtern. Die Abstützung entlastet die Schwenkverbindung, mittels derer der Stützarm an dem Außenumfang des Klemmstücks angebracht ist.

Dadurch daß der Stützarm, bzw. die Stützarme in eine Ausnehmung in der Außenkontur des Klemmstücks einschwenkbar ist/sind, wird sowohl die Montage als auch die Demontage des Anzugselements erleichtert und werden Beschädigungen des Klemmstücks im Bereich der Stützarme vermieden. Die Stützarme liegen nämlich beim Drehen des Anzugselements in der Aufnahmebohrung für das Klemmstück innerhalb dessen Außenkontur. Zum einen wird dadurch eine Behinderung des Verdrehens des Klemmstücks durch überstehende Stützarme vermieden; gleichzeitig wird verhindert, daß die Stützarme während der Drehung des Klemmstücks auf etwaige Vorsprünge an der Innenwand der Aufnahmebohrung auflaufen und bei Weiterdrehen des Klemmstücks von diesem abgeschert werden.

Eine bevorzugte Ausführungsform des erfindungsgemäßen Beschlages, bei der an dem Außenumfang des Klemmstücks ein Außengewinde vorgesehen ist, zeichnet sich dadurch aus, daß der Stützarm in eingeschwenkter Lage mit der Außenkontur des Klemmstücks fluchtet und an seiner mit der Außenkontur fluchtenden Fläche wenigstens einen rippenartigen Ansatz aufweist, der in Fortsetzung des Gewindeganges des Außengewindes an dem Klemmstück verläuft. Der von dem Außenumfang des Klemmstücks radial nach außen ragende Gewindegang erleichtert zum einen das Ein- und Ausdrehen des Klemmstücks in die bzw. aus der zugehörigen Bohrung. Darüber hinaus verbessert das Außengewinde die Verankerung des Anzugselements in dem betreffenden Bauelement, insbesondere wenn dieses aus Pressspan gefertigt ist. Zusätzlich zu der sich ohnehin ergebenden kraftschlüssigen Klemmverbindung mit der Bohrungswand greift das Gewinde nämlich formschlüssig in die Spanstruktur des Bauelements ein. Aufgrund der beschriebenen Ausgestaltung des erfindungsgemäßen Beschlages können die genannten Wirkungen auch in Bereich der Stützarme erzielt werden.

Zur Verbindung von Anzugsbolzen und Klemmstück weisen der Anzugsbolzen und/oder das Klemmstück zweckmäßigerweise an ihren einander zugewandten Flächen im wesentlichen quer zu der Spannrichtung wenigstens einen Mitnehmer auf, der in eine entsprechende Ausnehmung an der zugeordneten Gegenfläche eingreift. Auf diese Art und Weise wird zwischen den beiden Bauteilen des Anzugselements eine Verbindung hergestellt, die in der Lage ist, sowohl in axialer Richtung des Anzugsbolzens als auch in einer dazu senkrechten Ebene wirkende Belastungen aufzunehmen. Die sich ergebende formschlüssige Verbindung zwischen Anzugsbolzen und Klemmstück verhindert eine Relativbewegung dieser beiden Elemente sowohl beim axialen Eindrücken des Anzugselements in die Aufnahmebohrung für das Klemmstück als auch beim Ein- oder Ausdrehen des Anzugselements vorzugsweise unter Nutzung gewindeartig ausgebildeter rippenartiger Ansätze am Außenumfang des Klemmstücks.

Der Verbindung von Klemmstück und Anzugsbolzen dient ebenfalls, daß das Klemmstück den Anzugsbolzen an dessen dem Spannteil abgewandten Ende quer zu der Spannrichtung zumindest teilweise übergreift. Die beschriebene Überlappung des Klemmstücks an dem Anzugsbolzen kann zusätzlich oder alternativ zu der vorstehend beschriebenen Mitnehmer-Verbindung vorgesehen werden. Wird auf die Mitnehmer-Verbindung zugunsten der Überlappung des Klemmstücks vollständig verzichtet, so vereinfacht sich hierdurch die Fertigung des Anzugsbolzens sowie des Klemmstücks erheblich, da nunmehr eine wirksame formschlüssige Verbindung zwischen den beiden Bauteilen sichergestellt ist, ohne daß zu diesem Zweck an deren Berührungsflächen Mitnehmer und/oder Ausnehmungen angeformt werden müßten. In Richtung auf das Spannteil ist der Anzugsbolzen aufgrund seiner quer zu der Spannrichtung vorgesehenen Erweiterung an dem Klemmstück festgelegt.

Eine Vereinfachung der Montage-Vorarbeiten ergibt sich, wenn das Klemmstück in im wesentlichen axialer Richtung geteilt ist und die Teile des Klemmstücks gelenkig miteinander verbunden sind. In diesem Fall läßt sich der Anzugsbolzen in eines der schalenartigen Elemente des Klemmstücks einlegen und anschließend gemeinsam mit dem Klemmstück in die betreffende Bohrung einführen. Als gelenkige Verbindung der Klemmstückteile kommt beispielsweise im Falle von Klemmstücken aus Kunststoff ein Kunststoffilm in Frage. Darüber hinaus lassen sich nach der Demontage von Anzugselementen Anzugsbolzen und Klemmstück einfach voneinander trennen. Dadurch wird die Möglichkeit eröffnet, ein und denselben Anzugsbolzen mehrfach zu verwenden und gebrauchte deformierte Klemmstücke gegen neue funktionstüchtige Klemmstücke auszutauschen.

Durch entsprechende Vorteile zeichnet sich eine Ausführungsform der Erfindung aus, bei der das Klemmstück in im wesentlichen axialer Richtung geteilt ist und die Teile des Klemmstücks lösbar miteinander verbindbar sind. Eine handhabungsfreundliche, weil einfach herstellbare und einfach lösbare Verbindung der Teile des Klemmstücks ergibt sich, wenn diese miteinander verrastbar sind.

Im Falle einer weiteren bevorzugten Ausführungsform des erfindungsgemäßen Beschlages weist das Klemmstück einen Führungsansatz auf, der den Anzugsbolzen an dessen Außenumfang zumindest teilweise umgreift und der in Einbaulage das dem Klemmstück zugeordnete Bauelement in Spannrichtung überragt und dem spannteilseitigen Bauelement zugeordnet ist. Beim Betätigen des Spannteils werden die miteinander zu verbindenden Bauelemente mittels des Anzugsbolzens aneinandergezogen. Dabei tritt der Führungsansatz in die hierfür bestimmte Rohrung des spannteilseitigen Bauelements ein. In Einbaulage sorgt der Führungsansatz für eine großflächige radiale Abstützung des Anzugsbolzens auch in dem das Spannteil aufweisenden Bauelement. Dadurch wird die Verbindung der beiden Bauelemente auch quer zu der Spannrichtung stabilisiert.

Die Erfindung wird nachfolgend anhand schematischer Darstellungen von Ausführungsbeispielen näher erläutert. Es zeigen:
- Fig. 1: den Teilschnitt einer ersten Ausführungsform eines Anzugselements mit angespritztem Kunststoff-Klemmstück,
- Fig. 2: das Klemmstück gemäß Fig 1 im Querschnitt,
- Fig. 3: das Klemmstück einer zweiten Ausführungsform eines Anzugselements im Querschnitt,
- Fig. 4: einen mit dem Klemmstück gemäß Fig. 3 verrastbaren Anzugsbolzen,
- Fig. 5: ein Klemmstück aus zwei gelenkig miteinander verbundenen Halbschalen und
- Fig. 6: die Innenflächen der Halbschalen des Klemmstücks gemäß Fig. 5.

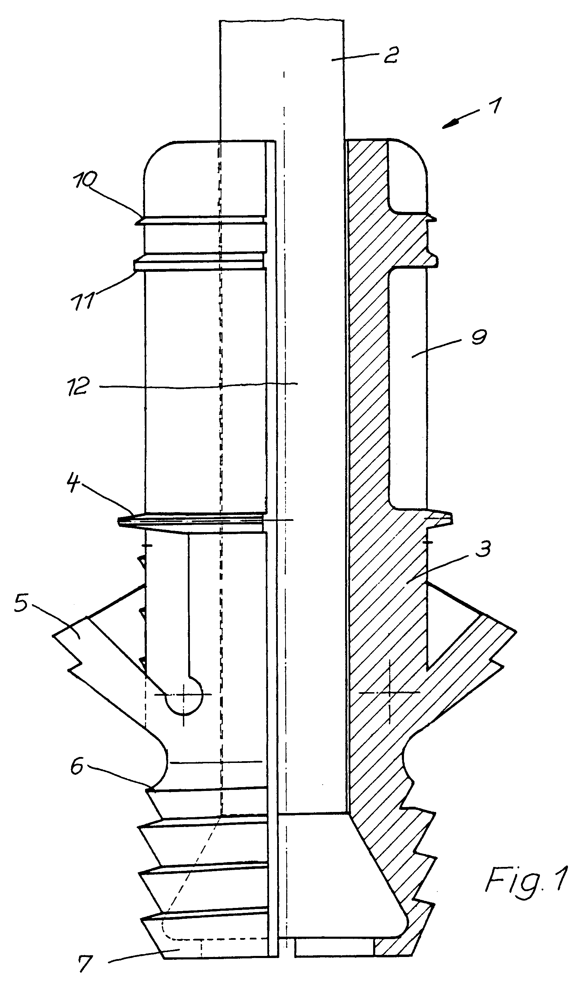

In Fig. 1 dargestellt ist ein Anzugselement 1 zur lösbaren Verbindung zweier nicht dargestellter Möbelplatten. Das Anzugselement 1 setzt sich zusammen aus einem Anzugsbolzen 2 sowie aus einer als Klemmstück dienenden Spreizmuffe 3.

Bei der Montage wird die Spreizmuffe 3 in eine entsprechende Bohrung der betreffenden Möbelplatte eingeführt. Sie wird begrenzt durch einen an ihrem Außenumfang angeordneten radialen ringartigen Anschlag 4, der die Bohrung der Möbelplatte seitlich überragt und mittels dessen sich das Anzugselement 1 am Randbereich der Bohrung abstützt. Überschreitet die Tiefe der Bohrung das vorgegebenen Sollmaß, so begrenzt der Anschlagring 4 die Eintringtiefe des Anzugselements 1.

Neben dem Anschlag 4 sind an dem Außenumfang der Spreizmuffe 3 elastisch verschwenkbare Stützarme 5 sowie mehrere radiale rippenartige Ansätze 6 vorgesehen. Die rippenartigen Ansätze 6 bilden ein rechtsgängiges Gewinde.

An den in Einschubrichtung des Anzugselements 1 ersten rippenartigen Ansatz 6 ist ein radial nach innen weisender Überstand 7 angeformt. Mit dem Überstand 7 übergreift die Spreizmuffe 3 das Ende des in ihrem Inneren geführten Anzugsbolzens 2. In Längsrichtung des Anzugsbolzens 2 ist die Spreizmuffe 3 mittels zweier längs verlaufender Trennschlitze 8 geteilt. Ein Führungsansatz 9 schließlich bildet in axialer Richtung die Fortsetzung der Spreizmuffe 3 und ist einstückig mit dieser aus Kunststoff gefertigt. In Montagelage ist der Führungsansatz 9 in eine Bohrung der zweiten Möbelplatte eingeführt. Zur axialen Fixierung sowie zum Ausgleich von Bohrungstoleranzen dienen Stützrippen 10, 11.

Der Anzugsbolzen 2 besitzt einen zylindrischen Bolzenschaft 12, der sich an seinem spreizmuffenseitigen Ende in radialer Richtung erweitert. Das spreizmuffenseitige Ende des Anzugsbolzens 2 stellt sich im Längsschnitt im wesentlichen trapezförmig, im Querschnitt im wesentlichen rechteckig dar. Die Gegenflächen der an den Anzugsbolzen 2 angespritzten Spreizmuffe 3 sind entsprechend ausgebildet.

An seinem nicht dargestellten oberen Ende erweitert sich der Anzugsbolzen 2 zu einem Bolzenkopf, mittels dessen er sich mit einem bekannten Spannteil in Eingriff bringen läßt. Bei dem bekannten Spannteil handelt es sich um einen Spannzylinder, der in eine topfartige Ausnehmung der betreffenden Möbelplatte eingelassen und in dieser drehbar gelagert ist. Zur Führung des Bolzenkopfes ist an dem Spannzylinder eine exzentrische Führungskurve vorgesehen. Mit der zur Aufnahme des Führungsansatzes 9 bestimmten Bohrung steht die topfartige Ausnehmung für den Spannzylinder über eine weitere Bohrung in Verbindung, deren Durchmesser den Durchmesser des Bolzenkopfes geringfügig übersteigt.

Die miteinander zu verbindenden Möbelplatten werden zunächst mit den erforderlichen Bohrungen bzw. Ausnehmungen versehen. Zu diesem Zweck wird in eine der Möbelplatten eine Bohrung für die Spreizmuffe 3 eingebracht. Die zweite Möbelplatte wird mit einer Bohrung für den Führungsansatz 9, einer topfartigen Ausnehmung für den Spannzylinder sowie mit einer die Ausnehmung für den Spannzylinder und die Bohrung für den Führungsansatz 9 verbindenden weiteren Bohrung versehen. Derart vorbereitet werden die Möbelplatten an den Montageort geliefert.

Zur Verbindung der Möbelplatten wird nun zunächst das Anzugselement 1 mit der Spreizmuffe 3 in die hierfür vorgesehene Bohrung eingedrückt bzw. unter Nutzung des am Außenumfang der Spreizmuffe 3 vorgesehenen Gewindes eingedreht. Die Stützarme 5 laufen dabei zunächst auf den Bohrungsrand auf und werden beim weiteren Einführen der Spreizmuffe 3 radial nach innen geschwenkt. Sobald der Anschlagring 4 auf dem Bohrungsrand aufliegt, ist die erforderliche Eindringtiefe der Spreizmuffe 3 in die Bohrung erreicht.

Weist die Bohrung gegenüber dem Außendurchmesser der Spreizmuffe 3 ein Übermaß auf, so überragen die Stützarme 5 die Außenkontur der Spreizmuffe 3 seitlich und liegen unter einem spitzen Winkel gegen die axiale Einschubrichtung geneigt an der Wandung der Bohrung an. Im Falle einer entgegen der Einschubrichtung ausgeübten Zugbeanspruchung der Spreizmuffe 3 stützen sich die Stützarme 5 an der Wandung der Bohrung ab und legen dadurch die Spreizmuffe in axialer Richtung fest.

Ist die Aufnahmebohrung für die Spreizmuffe 3 mit dem vorgegebenen Sollmaß oder mit einem innerhalb eines gewissen Toleranzbereichs liegenden Untermaß gebohrt worden, so wird die Kunststoff-Spreizmuffe 3 beim Einführen in die Bohrung quer zu der Einführungsrichtung gestaucht. Aufgrund ihrer Materialelastizität wird die Spreizmuffe 3 nach dem Einführen klemmend in der Bohrung gehalten. Die rippenartigen Ansätze 6 greifen in die Struktur der Bohrungswandung ein und verbessern dadurch die axiale Fixierung der Spreizmuffe 3. Die Stützarme 5 sind in diesem Fall in die Außenkontur der Spreizmuffe 3 eingeschwenkt.

Das in der beschriebenen Art und Weise in der ersten Möbelplatte verankerte Anzugselement 1 überragt diese Möbelplatte in axialer Richtung mit dem Führungsansatz 9 sowie mit dem freien Ende des Anzugsbolzens 2. Im weiteren Verlauf der Montagearbeiten wird nun das freie Ende des Anzugsbolzens 2 durch die Bohrung für den Führungsansatz 9 und die in deren Verlängerung vorgesehene Bohrung bis in die topfartige Ausnehmung für den Spannzylinder eingeschoben. Durch Drehen wird der Spannzylinder mit dem Kopf des Anzugsbolzens 2 in Eingriff gebracht. Mit Zunahme des Drehwinkels des Spannzylinders wird der Bolzenkopf an der Führungskurve des Spannzylinders entlanggeführt, und der Anzugsbolzen 2 wird auf Zug belastet. Infolgedessen zieht sich das Anzugselement 1 mit seinem Führungsansatz 9 in die hierfür vorgesehene Bohrung ein, ehe die miteinander zu verbindenden Möbelplatten aneinander zur Anlage kommen. Ein Weiterdrehen des Spannzylinders bewirkt nun eine axiale Relativbewegung des Anzugsbolzens 2 gegenüber der in der zweiten Möbelplatte axial fixierten Spreizmuffe 3. Das radial erweiterte spreizmuffenseitige Ende des Anzugsbolzens 2 spreizt bei dieser Relativverschiebung die Spreizmuffe 3 nach außen, erhöht dadurch die zwischen der Bohrungswand und dem Außenumfang der Spreizmuffe 3 wirkende Klemmkraft und verbessert infolgedessen den axialen Halt des Anzugselements 1 in der betreffenden Möbelplatte. Eine feste und dauerhafte Verbindung der beiden Möbelplatten ist daher gewährleistet. Die insbesondere in Fig. 2 erkennbaren Trennschlitze 8 der Spreizmuffe 3 führen zu einer Verringerung der für die Relativverschiebung des Anzugsbolzens 2 aufzubringenden Zugkraft, indem sie das Aufspreizen der Spreizmuffe 3 erleichtern.

Zum Lösen der Verbindung zwischen den beiden Möbelplatten sind die vorstehend beschriebenen Arbeitsschritte in umgekehrter Reihenfolge durchzuführen. Beim Ausdrehen der Spreizmuffe 3 aus der zugehörigen Bohrung, wobei die Spreizmuffe 3 aufgrund der Rechtsgängigkeit ihres Gewinde im Gegenuhrzeigersinn gedreht werden muß, können sich die Stützarme 5 an Anlagekanten 13 abstützen, die am Außenumfang der Spreizmuffe 3 vorgesehen sind. Dadurch wird ein Abscheren der Stützarme 5 beim Ausdrehen der Spreizmuffe 3 verhindert.

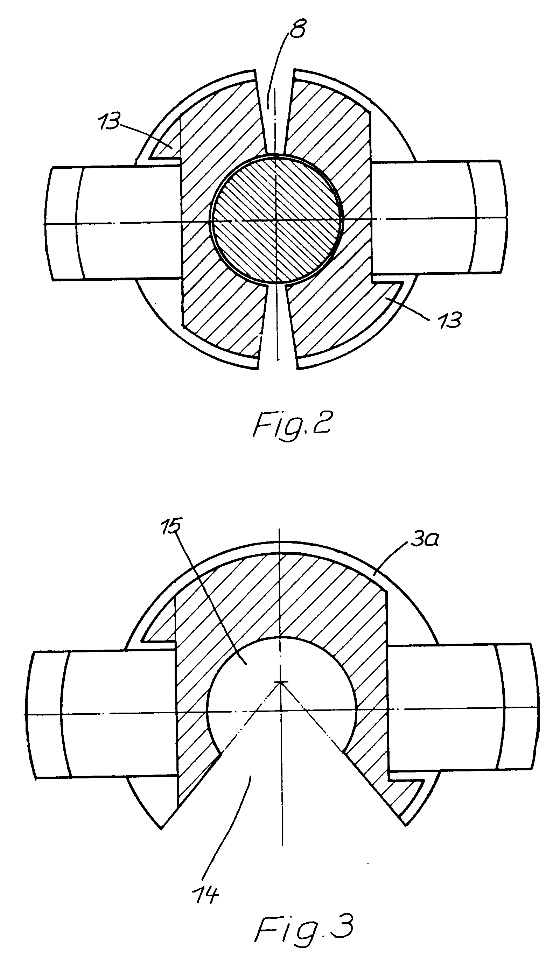

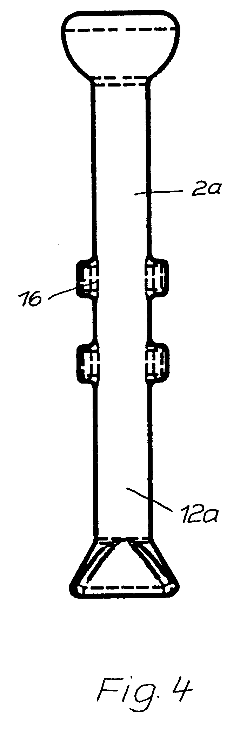

Während bei dem Anzugselement 1 der Fign. 1 und 2 die aus Kunststoff gefertigte Spreizmuffe 3 an den Anzugsbolzen 2 angespritzt ist, zeigen die Fign. 3 und 4 miteinander verrastbare Bauteile.

Eine Spreizmuffe 3a umgreift in Gebrauchslage als Klemmstück einen Anzugsbolzen 2a an dessen Umfang lediglich teilweise. Zur Verbindung der beiden Bauteile wird der Anzugsbolzen 2a an einer seitlichen Rastführung 14 der Spreizmuffe 3a angesetzt und durch Druck in Querrichtung in eine Rastaufnahme 15 der Spreizmuffe 3a eingedrückt.

An einem Bolzenschaft 12a weist der Anzugsbolzen 2a radial nach außen gerichtete Mitnehmer 16 auf, die in entsprechend ausgebildete, nicht dargestellte Ausnehmungen an der Innenwand der Spreizmuffe 3a eingreifen. Mit Hilfe der Mitnehmer 16 und der zugehörigen Ausnehmungen an der Innenwand der Spreizmuffe 3a wird zwischen den Anzugsbolzen 2a und der Spreizmuffe 3a eine sowohl in axialer Richtung als auch in Drehrichtung des Anzugsbolzens 2a wirksame Verbindung geschaffen. So dienen die Mitnehmer 16 des Anzugsbolzens 2a beim Ein- oder Ausdrehen des betreffenden Anzugselementes für die Spreizmuffe 3a als Widerlager in Drehrichtung; beim Eindrücken des Anzugselementes 2a verhindern sie eine Relativverschiebung zwischen Spreizmuffe 3a und Anzugsbolzen 2a in axialer Richtung. Im übrigen stimmen der Anzugsbolzen 2a und die Spreizmuffe 3a mit den in den Fign. 1 und 2 dargestellten Bauelementen baulich überein.

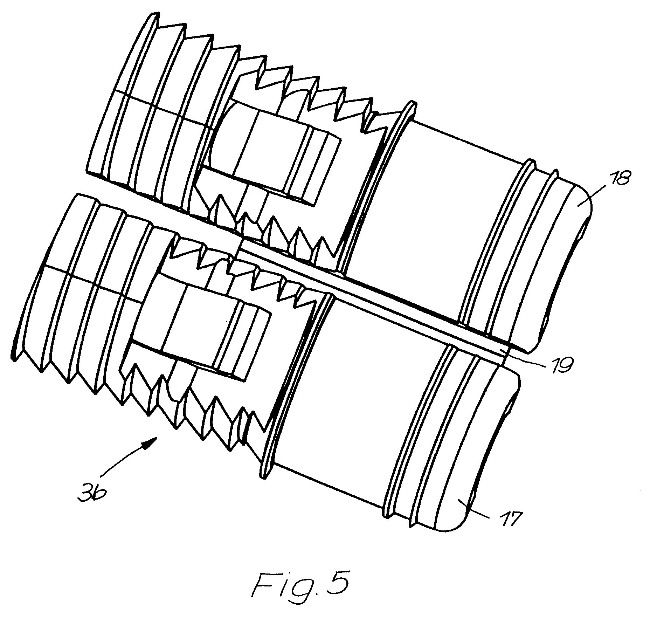

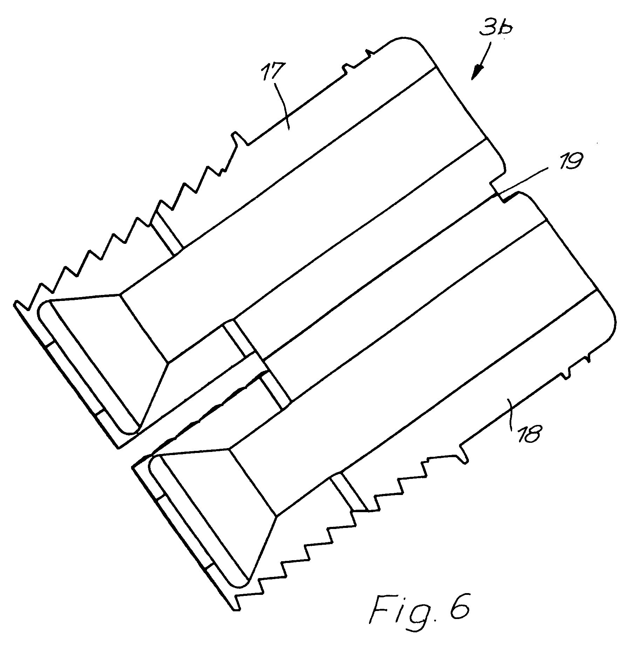

In den Figuren 5 und 6 ist ein Klemmstück in Form einer längsgeteilten Spreizmuffe 3b dargestellt. Infolge der Längsteilung der Spreizmuffe 3b ergeben sich Halbschalen 17, 13, die über einen Kunststoffilm 19 gelenkig miteinander verbunden sind. An ihren Innenflächen weisen die Halbschalen 17, 19 Ausnehmungen zur Aufnahme eines Anzugsbolzens auf. Zur Vormontage des Anzugselements wird zunächst ein Anzugsbolzen in die Ausnehmung der Halbschale 17 oder 18 eingelegt. Anschließend werden die Halbschalen 17 und 18 zusammengeklappt.

## Patentansprüche

1. Beschlag zum Verbinden von Bauelementen, insbesondere von Möbelplatten, mit einem sich an dem einen Bauelement abstützenden Spannteil sowie mit einem in einer Ausnehmung an dem zweiten Bauelement festlegbaren Anzugselement (1), wobei das Anzugselement (1) einen mittels des Spannteils in axialer Spannrichtung ziehbaren und sich in seinem dem zweiten Bauelement zugeordneten Bereich quer zu der Spannrichtung erweiternden Anzugsbolzen (2, 2a) sowie ein Klemmstück (3, 3a, 3b) aufweist, das den Umfang des Anzugsbolzens (2, 2a) im Bereich der Erweiterung zumindest teilweise umgreift und mittels des Anzugsbolzens (2, 2a) quer zu der Spannrichtung spreizbar ist, dadurch gekennzeichnet, daß das Klemmstück (3, 3a, 3b) an seinem dem Anzugsbolzen (2, 2a) abgewandten Außenumfang wenigstens einen, vorzugsweise zwei, die Außenkontur des Klemmstücks (3, 3a, 3b) quer zu der Spannrichtung überragenden und gegen die Spannrichtung elastisch verschwenkbaren Stützarm (5) aufweist.

2. Beschlag nach Anspruch 1, dadurch gekennzeichnet, daß an dem Klemmstück (3, 3a, 3b) wenigstens eine in einer radialen Ebene wirksame Abstützung für den Stützarm (5) vorgesehen ist.

3. Beschlag nach Anspruch 1 oder 2, dadurch gekennzeichnet, daß der Stützarm (5) in eine Ausnehmung in der Außenkontur des Klemmstücks (3, 3a, 3b) einschwenkbar ist.

4. Beschlag nach Anspruch 3 mit einem Außengewinde an dem Außenumfang des Klemmstücks (3, 3a, 3b), dadurch gekennzeichnet, daß der Stützarm (5) in eingeschwenkter Lage mit der Außenkontur des Klemmstücks (3, 3a, 3b) fluchtet und an seiner mit der Außenkontur fluchtenden Fläche wenigstens einen rippenartigen Ansatz aufweist, der in Fortsetzung des Gewindeganges des Außengewindes an dem Klemmstück (3, 3a, 3b) verläuft.

5. Beschlag nach einem der Ansprüche 1 bis 4, dadurch gekennzeichnet, daß der Anzugsbolzen (2, 2a) und/oder das Klemmstück (3, 3a, 3b) an ihren einander zugewandten Flächen im wesentlichen quer zu der Spannrichtung wenigstens einen Mitnehmer (16) aufweisen, der in eine Ausnehmung an der zugeordneten Gegenfläche eingreift.

6. Beschlag nach einem der Ansprüche 1 bis 5, dadurch gekennzeichnet, daß das Klemmstück (3, 3a, 3b) den Anzugsbolzen (2, 2a) an dessen dem Spannteil abgewandten Ende quer zu der Spannrichtung zumindest teilweise übergreift.

7. Beschlag nach einem der Ansprüche 1 bis 6, dadurch gekennzeichnet, daß das Klemmstück (3, 3a, 3b) in im wesentlichen axialer Richtung geteilt ist und die Teile des Klemmstücks (3, 3a, 3b) gelenkig miteinander verbunden sind.

8. Beschlag nach einem der Ansprüche 1 bis 7, dadurch gekennzeichnet, daß das Klemmstück (3, 3a, 3b) in im wesentlichen axialer Richtung geteilt ist und die Teile des Klemmstücks (3, 3a, 3b) lösbar miteinander verbindbar sind.

9. Beschlag nach Anspruch 8, dadurch gekennzeichnet, daß die Teile des Klemmstücks (3, 3a, 3b) miteinander verrastbar sind.

10. Beschlag nach einem der Ansprüche 1 bis 9, dadurch gekennzeichnet, daß das Klemmstück (3, 3a, 3b) einen Führungsansatz aufweist, der den Anzugsbolzen (2, 2a) an dessen Außenumfang zumindest teilweise umgreift und der in Einbaulage das dem Klemmstück (3, 3a, 3b) zugeordnete Bauelement in Spannrichtung überragt und dem spannteilseitigen Bauelement zugeordnet ist.
